# EUROPÄISCHE PATENTSCHRIFT

(11) **EP 4 351 831 B1**
(45) Veröffentlichungstag und Bekanntmachung des Hinweises auf die Patenterteilung: **25.02.2026**
(21) Anmeldenummer: 22732080.1
(22) Anmeldetag: 31.05.2022
(51) Int. Cl.: B23Q 39/04, B23K 37/047, B23K 26/10, B23K 26/22, B23K 26/244, B23K 37/04, B26B 21/40

(54) **VERFAHREN UND VORRICHTUNG ZUM SCHWEISSEN VON KLINGEN**
METHOD AND DEVICE FOR WELDING BLADES
PROCÉDÉ ET DISPOSITIF POUR SOUDER DES LAMES

(30) Priorität: 09.06.2021 DE 102021114813
(43) Veröffentlichungstag der Anmeldung: 17.04.2024
(73) Patentinhaber: Pia Automation Holding Gmbh, 97616 Bad Neustadt a.d. Saale (DE)
(72) Erfinder: SCHÖNER, Hubert, 92533 Wernberg-Köblitz (DE); HELMS, Christoph, 92224 Amberg (DE); BAUER, Michael, 92237 Sulzbach-Rosenberg (DE)
(74) Vertreter: Patentanwälte Olbricht Buchhold Keulertz
(86) Internationale Anmeldenummer: PCT/EP2022/064763
(87) Internationale Veröffentlichungsnummer: WO 2022/258435

(56) Entgegenhaltungen:
- EP-B1- 2 419 247
- CN-A- 109 396 648
- CN-B- 106 735 679

## Beschreibung

Die Erfindung betrifft gemäß dem Oberbegriff von Anspruch 1 eine Vorrichtung zum Schweißen von Klingen insbesondere für Nassrasierer.

Darüber hinaus betrifft die Erfindung gemäß Anspruch 10 ein Verfahren zum Schweißen von derartigen Klingen.

Auf dem Markt erhältliche Nassrasierer weisen seit einiger Zeit einen fest mit einem Handgriff verbundenen oder einen austauschbaren Rasierkopf auf, wobei der Rasierkopf eine Schneideinheit umfasst. Bei Modellen von Nassrasierern bzw. Rasierköpfen, die besonders auf eine gründliche und hautschonende Rasur ausgerichtet sind, weisen die Rasierköpfe mehrere parallele Klingen auf, die in einer Schneideinheit angeordnet sind.

In Bezug auf entsprechende Rasierköpfe und derartige Schneideinheiten sind bereits verschiedene Konstruktionen und Herstellungsverfahren bekannt, die beispielsweise die Anordnung von Klingen in Aufnahmeschlitzen im Rasierkopf oder das Verschweißen von Klingen an einem Trägerrahmen umfassen.

Dabei sind sowohl Ausführungsformen, bei denen jeweils eine Klinge an einem individuellen Träger verschweißt ist, als auch Ausführungsformen, bei denen mehrere Klingen an einem gemeinsamen Trägerrahmen verschweißt sind, bekannt.

Die vorliegende Erfindung befasst sich dabei mit der Herstellung von Schneideinheiten, wobei mehrere Klingen an einem gemeinsamen Trägerrahmen verschweißt werden.

Bekannte Vorrichtungen und Verfahren zum Verschweißen von Klingen bieten häufig eine nur eingeschränkte Skalierbarkeit hinsichtlich der Anzahl in einer bestimmten Zeit hergestellter Schneideinheiten. Darüber hinaus erfordern Arbeiten an bekannten Fertigungsanlagen beispielsweise im Zuge einer Wartung oder Instandsetzung häufig die Stilllegung der gesamten Anlage, sodass die Produktion in dieser Zeit vollständig zum Erliegen kommt.

Es ist daher eine Aufgabe der Erfindung, eine Vorrichtung zum Schweißen von Klingen anzugeben, die sowohl eine verbesserte Skalierbarkeit hinsichtlich der Anzahl in einer bestimmten Zeit hergestellter Schneideinheiten als auch eine hohe Verfügbarkeit der Gesamtanlage ermöglicht. Es ist eine weitere Aufgabe der Erfindung, ein Verfahren zum Schweißen von Klingen anzugeben, das sowohl eine verbesserte Skalierbarkeit hinsichtlich der Anzahl in einer bestimmten Zeit hergestellter Schneideinheiten als auch eine hohe Verfügbarkeit der Gesamtanlage ermöglicht.

Hauptmerkmale der Erfindung sind im kennzeichnenden Teil von Anspruch 1 sowie in Anspruch 10 angegeben. Ausgestaltungen sind Gegenstand der Ansprüche 2 bis 9 und 11 bis 15.

Die Erfindung betrifft also insbesondere den Prozess des Zuführens und Verschweißens von Klingen im Gesamtherstellungsprozess einer Rasiereinheit. Dieser Zwischenprozess wird bei der Fertigung von Schneideinheiten für Nassrasierer eingesetzt, bei denen eine oder mehrere Klingen auf einem Trägerrahmen zu einer Schneideinheit verschweißt werden. Je nach Konstruktion der Schneideinheit können entsprechend vor- und/oder nachgelagerte Montageschritte nötig sein, um die Schneideinheit zu komplettieren.

Häufig bestehen solche Schneideinheiten aus mehreren Klingen für die normale Rasur und einer zusätzlichen Trimmerklinge. Die Trimmerklinge wird, sofern die herzustellende Schneideinheit eine solche aufweisen soll, je nach Konstruktion der Schneideinheit in der im Folgenden beschriebenen Vorrichtung zum Verschweißen von Klingen mitverarbeitet oder in einem vor- oder nachgelagerten Montageschritt separat montiert. Die Schneideinheit ist dann in der Regel eine Unterbaugruppe der kompletten Rasiereinheit.

Eine erfindungsgemäße Vorrichtung zum Schweißen von Klingen weist mindestens einen Rundschalttisch auf. Ein solcher Rundschalttisch weist eine Anzahl von Bearbeitungsstationen auf, die um einen Drehteller des Rundschaltisches herum positioniert sind und zur Interaktion mit auf dem Rundschalttisch angeordneten Werkzeugen und/oder einem auf dem Rundschalttisch positionierten Werkstück ausgebildet sind.

Beispielsweise weist ein solcher Rundschalttisch sechs oder acht Bearbeitungsstationen auf. Die Bearbeitungsstationen sind in der Regel in Umfangsrichtung regelmäßig beabstandet, d.h. bei sechs Bearbeitungsstationen in jeweils um 60° und bei acht Bearbeitungsstationen in jeweils um 45° verschiedenen Winkelpositionen.

Der Drehteller des Rundschalttisches ist um eine zumeist senkrechte oder waagerechte Drehachse drehbar, sodass ein in einer Aufnahme auf dem Drehteller des Rundschalttisches angeordnetes Werkstück je nach der jeweiligen Winkelposition der jeweiligen Aufnahme auf dem Rundschalttisch nacheinander in den Arbeitsbereich der Bearbeitungsstationen fahrbar bzw. schaltbar ist.

Die Anzahl und Anordnung der Aufnahmen auf dem Rundschalttisch entsprechen in der Regel den Bearbeitungsstationen. Es besteht jedoch die Möglichkeit, dass eine oder mehrere Bearbeitungsstationen leer verbleiben, d.h. dass der Rundschalttisch beispielsweise jeweils sechs Aufnahmen auf dem Drehteller und sechs Bearbeitungsstationen aufweist, wobei jedoch weniger als sechs, beispielsweise nur drei Bearbeitungsstationen funktionell eingerichtet sind.

In bevorzugten Ausführungsformen der Erfindung wird ein als ein Torque-Rundschalttisch ausgebildeter Rundschalttisch verwendet. Torque-Rundschalttische bieten gegenüber mechanischen Rundschalttischen den Vorteil, dass der Teilungsfehler in der Regel wesentlich kleiner ist. Durch die Steuerung eines Torque-Rundschalttisches sind die Winkelpositionen der einzelnen Bearbeitungsstationen zudem mit einer höheren Genauigkeit ansteuerbar.

Die Aufnahmen auf dem Rundschalttisch sind in bevorzugten Ausführungsformen der Erfindung als Setzflügel ausgebildet, die zur Aufnahme, zum Transport und zur Positionierung der Klingen auf dem Rundschalttisch ausgebildet sind.

Die Setzflügel sind jeweils senkrecht zur Oberfläche des Rundschalttisches beweglich und vorzugsweise gefedert ausgeführt.

Die Bewegung der Setzflügel erfolgt mit jeweils einer Hubeinheit, die bei einer waagerechten Ausrichtung der Oberfläche des Rundschalttisches als eine Vertikalhubeinheit ausgebildet ist. Die Setzflügel sind dann mithilfe einer Hubeinheit senkrecht zur Oberfläche des Drehtellers beweglich.

In besonders vorteilhaften Ausführungsformen der Erfindung ist die Hubeinheit mit der Drehbewegung des Rundschalttisches synchronisiert. Damit ist ein Abstand der Aufnahmeeinrichtung des Setzflügels für eine Klinge vom Drehteller an die Erfordernisse der jeweiligen Bearbeitungsstation anpassbar ist. Dies kann beispielsweise entweder mechanisch, zum Beispiel mit einem Kurvengetriebe, oder elektronisch, zum Beispiel mit einem Servoantrieb, erfolgen.

Die Setzflügel sind in einer bevorzugten Ausführungsform der Erfindung auf dem Rundschalttisch so angeordnet, dass die Schneidkante einer in der Aufnahmeeinrichtung eines Setzflügels gehalterten Klinge tangential zum Drehteller des Rundschalttisches angeordnet ist. Dadurch wird der Einfluss eines Teilungs- und/oder Positionsfehlers des Rundschalttisches auf die Position der Schnittkante der Klinge minimiert.

Die erste für die Erfindung wesentliche Bearbeitungsstation des Rundschalttisches ist insbesondere die Klingenzuführstation. Die Klingenzuführstation weist eine Klingenbereitstellungseinrichtung zur Bereitstellung von Klingen auf.

In einer Ausführungsform der Erfindung ist die Klingenbereitstellungseinrichtung als eine Klingenbevorratungseinrichtung zur Bevorratung von Klingen ausgebildet. Beispielsweise ist eine solche Klingenbevorratungseinrichtung als ein Klingenmagazin ausgebildet, in dem die einzelnen Klingen als ein Stapel übereinanderliegend bereitgestellt werden.

In Ausführungsformen der Erfindung weist die Klingenbevorratungseinrichtung einen Abteilschieber auf, mit dem jeweils eine einzelne Klinge aus dem Klingenmagazin herausbeförderbar und zur weiteren Verarbeitung bereitstellbar ist. Ein solcher Abteilschieber ist in seiner Bewegung in bevorzugten Ausführungsformen der Erfindung mit dem Rundschalttisch synchronisiert, sodass beispielsweise in jedem Prozesstakt eine Klinge bereitgestellt wird. Die Synchronisierung kann dabei beispielsweise mechanisch, zum Beispiel mithilfe eines Kurvengetriebes, oder elektronisch, zum Beispiel mithilfe eines Servoantriebes, erfolgen.

Mithilfe des in der Position der Klingenzuführstation befindlichen Setzflügels auf dem Drehteller ist jeweils eine einzelne Klinge von der Klingenbereitstellungseinrichtung aufnehmbar.

Die zweite für die Erfindung wesentliche Bearbeitungsstation des Rundschalttisches ist die Schweißstation. Die Schweißstation weist eine Schweißvorrichtung auf, mit der die Klingen mit dem Trägerrahmen verschweißbar sind. In einer Ausführungsform der Erfindung ist die Schweißvorrichtung zum Laserschweißen der Klingen ausgebildet.

Vorteilhaft ist darüber hinaus, wenn die Vorrichtung zum Schweißen von Klingen geeignete Mittel zur Zuführung eines leeren Trägerrahmens in den Arbeitsbereich der Schweißstation, zur Ausrichtung des Trägerrahmens in der Schweißstation und zum Abtransport einer aus dem Trägerrahmen und mindestens einer Klinge fertig geschweißten Schneideinheit aus dem Arbeitsbereich der Schweißstation heraus aufweist.

Zur Zuführung eines leeren Trägerrahmens in den Arbeitsbereich der Schweißstation weist die Vorrichtung zum Schweißen von Klingen eine geeignete Handhabungseinrichtung, beispielsweise ein Pick&Place-Handling, auf, mit der ein Trägerrahmen von einer Bereitstellungsposition von einer Schnittstellenvorrichtung aufnehmbar und in einer in einem Übergabebereich befindlichen Halterungseinrichtung platzierbar ist.

Diese Halterungseinrichtung ist in Ausführungsformen der Erfindung als ein Bearbeitungsnest ausgebildet, das erfindungsgemäß richt oder nur in einem begrenzten Winkelbereich mit dem Drehteller des Rundschalttisches umlaufend bewegbar ist, sondern in ersterem Fall im Arbeitsbereich der ersten Bearbeitungsstation verbleibt.

Die Bereitstellungsposition des Trägerrahmens kann beispielsweise durch eine als ein Vorratsmagazin für Trägerrahmen, eine Warenteil-Logistik (WT-Logistik) oder als ein Shuttle-System ausgebildete Schnittstellenvorrichtung realisiert sein.

Die Halterungseinrichtung weist in bevorzugten Ausführungsformen der Erfindung jeweils mindestens eine Achshandling-Einheit auf, mit der der Trägerrahmen in der Halterungseinrichtung bzw. gemeinsam mit der Halterungseinrichtung zur Bearbeitung und/oder Bestückung mit Klingen positionierbar ist.

Vorzugsweise wird dazu eine Dreiachshandling-Einheit mit zwei zueinander senkrechten Linearachsen, die parallel zur Oberfläche des Drehtellers des Rundschalttisches ausgerichtet sind, und einer Drehachse senkrecht zu den Linearachsen verwendet.

Mithilfe der Linearachsen ist eine Positionierung des Trägerrahmens in der Bearbeitungsstation, beispielsweise in der Schweißstation beim Schweißen und zur Übergabe nach dem Schweißen möglich. Mithilfe der Drehachse sind Korrekturen der Winkelstellung zwischen Klingen und Trägerrahmen möglich und es sind Klingen mit unterschiedlicher Ausrichtung, beispielsweise eine um 180° gedrehte Trimmerklinge, montierbar.

Mithilfe der Bewegung entlang der Linearachsen ist die Halterungseinrichtung in Ausführungsformen der Erfindung aus dem Übergabebereich der Handhabungseinrichtung in den Arbeitsbereich der Schweißstation des Rundschalttisches verfahrbar.

Erfindungsgemäß können auch Ausführungsformen mit zwei Achshandling-Einheiten je Halterungseinrichtung vorgesehen sein, die einen kontinuierlichen Prozess beim Aufsetzen und Schweißen der Klingen gewährleisten.

Während in einer derartigen Ausführungsform der Erfindung eine erste Achshandling-Einheit in Zusammenarbeit mit dem Rundschalttisch der Nachpositionierung des Trägerrahmens beim Schweißen der Klingen zugeordnet ist, ist die zweite Achshandling-Einheit in Zusammenarbeit mit der Handhabungseinrichtung für die Trägerrahmen der Übergabe der fertiggeschweißten Schneideinheiten an die WT-Logistik und das Bestücken der Halterungseinrichtung mit einem neuen Trägerrahmen zugeordnet, wobei die Halterungseinrichtung bzw. das Bearbeitungsnest starr positioniert bleiben kann.

In einer weiteren Ausführungsform weist die Vorrichtung zum Schweißen von Klingen mindestens eine Doppel-Halterungsvorrichtung zur Aufnahme von zwei Trägerrahmen nebeneinander auf, wobei der Doppel-Halterungseinrichtung eine für beide Trägerrahmen gemeinsame Achshandling-Einheit zugeordnet ist. Dabei sind die einzelnen Trägerrahmen mithilfe der Achshandling-Einheit an der Bearbeitungsstation nacheinander zur Durchführung des jeweiligen Prozessschrittes positionierbar.

Die mindestens eine der Halterungseinrichtung zugeordnete Achshandling-Einheit ist auch zum Transport der aus dem Trägerrahmen und einer oder mehrerer Klingen geschweißten Schneideinrichtung aus Schweißstation heraus in den Übergabebereich einer Handhabungsvorrichtung ausgebildet.

In bevorzugten Ausführungsformen der Erfindung ist dieselbe Handhabungseinrichtung sowohl zum Bestücken der Halterungseinrichtungen mit leeren Trägerrahmen als auch zur Übergabe der Schneideinheiten aus den Halterungseinrichtungen heraus an eine Schnittstellenvorrichtung ausgebildet.

Eine vorteilhafte Vorrichtung zum Schweißen von Klingen kann zusätzlich zu den wesentlichen Bearbeitungsstationen am Rundschalttisch eine oder mehrere der folgenden Bearbeitungsstationen am Rundschalttisch selbst oder in unmittelbarer Nähe dazu aufweisen.

Eine optionale Klingenschneidstation am Rundschalttisch dient dem Zuschnitt der Klingen auf das benötigte Breitenmaß und ist nur dann erforderlich, wenn an der Klingenzuführstation Klingen bereitgestellt und übergeben werden, die nicht die für die herzustellende Schneideinheit benötigte Breite aufweisen.

Eine Klingenschneidstation weist in Ausführungsformen der Erfindung eine Klingenschneideinheit und eine Klemmeinheit auf. Mithilfe der Klemmeinheit ist der Setzflügel der jeweiligen Aufnahme des Rundschalttisches mit der Klinge klemmbar und mithilfe der Schneideinheit die Klinge auf das erforderliche Breitenmaß zuschneidbar.

Die Schneideinheit kann beispielsweise zum Schneiden der Klingen durch ein angetriebenes Schneidmesser oder durch Laserschneiden ausgebildet sein.

Die Bewegung der Klemmeinheit und ggf. des Schneidmessers der Schneideinheit ist/sind in bevorzugten Ausführungsformen mit dem Rundschalttisch synchronisiert. Die Synchronisierung kann dabei beispielsweise mechanisch, zum Beispiel mithilfe eines Kurvengetriebes, oder elektronisch, zum Beispiel mithilfe eines Servoantriebes, erfolgen.

Eine optionale Kontrollstation am Rundschalttisch kann beispielsweise zur Kontrolle der Klingen vor und/oder nach einem Zuschnitt oder der Positionierung der Klingen auf dem Trägerrahmen ausgebildet sein.

Eine optionale Kontrollstation in unmittelbarer Nähe zum Rundschalttisch, d.h. nicht eine der dem Rundschalttisch in den verschiedenen Winkelpositionen zugeordnete Bearbeitungsstation, kann beispielsweise zur Qualitätskontrolle der fertig geschweißten Schneideinheiten ausgebildet sein.

Eine Kontrollstation kann beispielsweise zumindest einen optoelektronischen Sensor, zum Beispiel eine Kamera, einen magnetoptischen Sensor oder eine Röntgeneinrichtung aufweisen. Eine weitere optionale Bearbeitungsstation ist eine Reinigungsstation, die beispielsweise zur Reinigung einer fertig geschweißten Schneideinheit oder einzelner Klingen und/oder von Trägerrahmen ausgebildet ist.

Eine andere optionale Bearbeitungsstation ist eine Beschriftungsstation, an der einzelne Klingen oder Trägerrahmen oder die Schneideinheit mithilfe geeigneter Mittel beschriftet werden können.

Es sind jedoch auch andere hier nicht genannte Bearbeitungsstationen möglich.

Ein erfindungsgemäßes Verfahren zum Schweißen von Klingen wird in Anspruch 10 definiert.

Die Reihenfolge des Bereitstellens und Platzierens des Trägerrahmes in der Halterungseinrichtung und das Verbringen des Trägerrahmens in den Arbeitsbereich einer Bearbeitungsstation des Rundschalttisches (Schritte a bis c) und die Aufnahme der Klinge und des Taktens bis zur Bearbeitungsstation, in deren Arbeitsbereich der Trägerrahmen im Bearbeitungsnest gehaltert ist (Schritte d bis f) kann ganz oder teilweise auch umgekehrt sein, d.h. erst die Schritte d bis f und dann die Schritte a bis c oder diese können ganz oder teilweise parallel ablaufen.

Sollen Schneideinheiten mit mehreren Klingen hergestellt werden, so werden die Verfahrensschritte d) bis i) wiederholt, bis die Schneideinheit die vorgesehene Anzahl an Klingen aufweist.

Das Bestücken des Trägerrahmens und das Schweißen können alternativ auch ablaufen, indem zunächst eine Mehrzahl oder alle vorgesehenen Klingen am Trägerrahmen positioniert und erst anschließend mit diesem verschweißt werden.

Die Verfahrensschritte g) bis i) laufen in bevorzugten Ausführungsformen des erfindungsgemäßen Verfahrens in der Schweißstation (6a) des Rundschalttisches (2) ab.

Die folgenden optionalen Verfahrensschritte können in allen ausführbaren Kombinationen vollständig oder teilweise in einem erfindungsgemäßen Verfahren zum Schweißen von Klingen enthalten sein:
- Takten des Rundschalttisches, bis die im Setzflügel gehalterte Klinge im Arbeitsbereich einer Klingenschneidstation angelangt ist
- Klemmen des Setzflügels und/oder der Klinge mithilfe einer Klemmeinheit
- Schneiden der Klinge auf das benötigte Breitenmaß
- Takten des Rundschalttisches, bis die im Setzflügel gehalterte Klinge im Arbeitsbereich einer Reinigungsstation angelangt ist
- Reinigen der Klinge
- Gegebenenfalls kann in der Reinigungsstation auch eine Reinigung der Setzflügel ohne Klinge erfolgen, um eine beim Schweißen auftretende Verschmutzung wieder zu entfernen.
- Takten des Rundschalttisches, bis die im Setzflügel gehalterte Klinge im Arbeitsbereich einer Kontrollstation angelangt ist
- Kontrolle der Klinge mithilfe entsprechender Kontrollmittel
- Kontrolle der fertigen Schneideinheiten, also bei auf den Trägerrahmen verschweißten Klinge(n),
- Takten des Rundschalttisches, bis die im Setzflügel gehalterte Klinge im Arbeitsbereich einer Beschriftungsstation angelangt ist
- Beschriftung der Klinge mit geeigneten Beschriftungsmitteln,
- Beschriftung der fertigen Schneideinheiten.

Es versteht sich, dass die vorstehend genannten Verfahrensschritte erst nach den wesentlichen Verfahrensschritten d) und e) erfolgen können, in denen die Klinge erst in den jeweiligen Setzflügel aufgenommen wird.

Verfahrensschritt d) ist in Ausführungsformen der Erfindung wie folgt realisiert: Es wird eine Klinge mithilfe einer als ein Klingenmagazin ausgebildeten Klingenbevorratungseinrichtung bereitgestellt, indem eine Klinge mithilfe eines Abteilschiebers aus dem Klingenstapel des Klingenmagazins abgeteilt und in eine Übergabeposition verschoben wird, in der die Klinge mithilfe eines Setzflügels gemäß Verfahrensschritt e) aufgenommen wird.

In einer bevorzugten Ausführungsform des erfindungsgemäßen Verfahrens wird eine Klinge in einem Arbeitstakt des Rundschalttisches an der Klingenzuführstation mithilfe eines Setzflügels aufgenommen, in einem oder mehreren Takten zu einer Klingenschneidestation weitergetaktet, dort entsprechend auf das erforderliche Breitenmaß zugeschnitten und anschließend in einem oder mehreren Takten zu einer Schweißstation weitergetaktet, wobei die Schritte g) und h) in der Schweißstation durchgeführt werden.

In einer Ausführungsform eines erfindungsgemäßen Verfahrens zum Schweißen von Klingen wird die Halterungseinrichtung mithilfe einer ersten Achshandling-Einheit und einer zweiten Achshandling-Einheit bewegt, wobei eine der Achshandling-Einheiten in Zusammenarbeit mit dem Rundschalttisch die Nachpositionierung des Trägerrahmens beim Schweißen der Klingen vornimmt und die jeweils andere Achshandling-Einheit in Zusammenarbeit mit der Handhabungseinrichtung für die Trägerrahmen die Positionierung der Halterungseinrichtung zur Übergabe der fertiggeschweißten Schneideinheiten an die Schnittstellenvorrichtung und zum Bestücken der Halterungseinrichtung mit einem neuen Trägerrahmen vornimmt, wobei die Halterungseinrichtung starr positioniert bleibt. Die erste und die zweite Achshandling-Einheit übernehmen dabei die jeweiligen Aufgaben vorzugsweise abwechselnd.

In einer Ausführungsform eines erfindungsgemäßen Verfahrens zum Schweißen von Klingen werden die Setzflügel mit jeweils einer Hubeinheit bewegt, sodass der Abstand einer im Setzflügel gehalterten Klinge bzw. der Aufnahmeeinrichtung des Setzflügels vom Drehteller in Abhängigkeit der Erfordernisse der jeweiligen Bearbeitungsstation angepasst ist. Das Anheben erfolgt dabei vorzugsweise, wenn der Drehteller in Bewegung ist, um etwaige Kollisionen mit einer der Bearbeitungsstationen zu vermeiden.

In einer Ausführungsform eines erfindungsgemäßen Verfahrens zum Schweißen von Klingen wird die Bewegung der Hubeinheiten und/oder der Arbeitsablauf an mindestens einer Bearbeitungsstation mit der Bewegung bzw. der Winkelposition des Drehtellers des Rundschalttisches synchronisiert.

In einer bevorzugten Ausführungsform eines erfindungsgemäßen Verfahrens zum Schweißen von Klingen wird zumindest eine erfindungsgemäße Vorrichtung zum Schweißen von Klingen verwendet.

Die beschriebenen funktionellen Bestandteile der Vorrichtung zum Schweißen von Klingen werden dann in ausführbaren Kombinationen entsprechend in Ausführungsformen des Verfahrens verwendet.

In einer Ausführungsform der Erfindung ist das Verfahren zum Schweißen von Klingen zur Herstellung von Schneideinheiten für Nassrasierer ausgebildet, wobei nicht unbedingt alle Schritte umfasst sein müssen, die zur Herstellung der fertigen Schneideinheit erforderlich sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1:: Eine schematische Darstellung einer erfindungsgemäßen Ausführungsform einer Vorrichtung zum Schweißen von Klingen,
- Fig. 2:: eine schematische Darstellung einer alternativen erfindungsgemäßen Ausführungsform einer Vorrichtung zum Schweißen von Klingen,
- Fig. 3:: eine schematische Darstellung einer weiteren alternativen erfindungsgemäßen Ausführungsform einer Vorrichtung zum Schweißen von Klingen und
- Fig. 4:: eine schematische Seitenansicht eines Setzflügels.

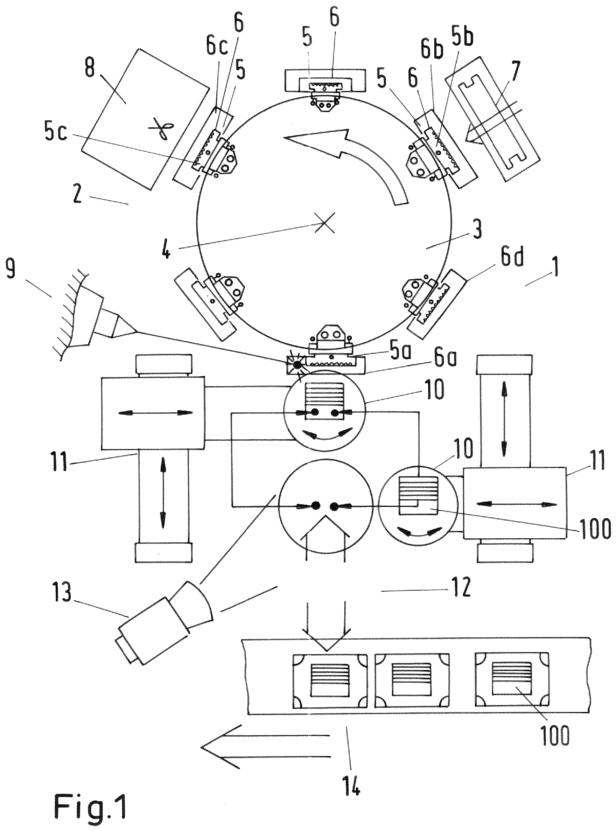

Die in Figur 1 schematisch dargestellte erfindungsgemäß Ausführungsform einer Vorrichtung zum Schneiden von Klingen 1 weist einen Rundschalttisch 2 mit einem Drehteller 3 auf. Der Drehteller 3 ist um eine Drehachse 4 herum drehbar gelagert.

Auf dem Drehteller 3 sind als Setzflügel ausgebildete Aufnahmen 5 angeordnet. Korrespondierend zu den in diesem Fall sechs Aufnahmen 5 sind um den Drehteller 3 herum ebenfalls sechs Bearbeitungsstationen 6 angeordnet.

Eine erste Bearbeitungsstation 6 ist als eine Schweißstation 6a ausgebildet. Eine zweite Bearbeitungsstation 6 ist als Klingenzuführstation 6b ausgebildet und weist eine Klingenbereitstellungseinrichtung 7 auf.

Eine dritte Bearbeitungsstation 6 ist als eine Klingenschneidestation 6c ausgebildet und weist eine Klingenschneideeinrichtung 8 auf. Die übrigen drei Bearbeitungsstationen 6 sind als leere Bearbeitungsstationen 6d ausgebildet, die in der dargestellten Ausführungsform keine spezielle Funktion aufweisen. Anstelle dieser leeren Bearbeitungsstationen 6d können in abgewandelten Ausführungsformen der Erfindung weitere funktionelle Bearbeitungsstationen 6 angeordnet sein.

Die Drehrichtung des Drehtellers 3 ist durch einen Pfeil angedeutet. Die Anordnung bzw. Reihenfolge der Bearbeitungsstationen 6 muss in Drehrichtung des Drehtellers 3 den vorgesehenen Bearbeitungsschritten entsprechen.

Die Schweißstation 6a weist eine Schweißvorrichtung 9 auf, die vorliegend zum Laserschweißen der Klingen und des Trägerrahmens 100 ausgebildet ist. Der Trägerrahmen 100 ist im Bereich des Rundtisches 2 mithilfe einer Halterungseinrichtung 10, die beispielsweise als ein Bearbeitungsnest ausgebildet ist, halterbar.

Jede Halterungseinrichtung 10 ist in der dargestellten Ausführungsform zur Halterung eines Trägerrahmens 100 ausgebildet und weist jeweils eine Achshandling-Einheit 11 auf, mit der die Halterungseinrichtung 10 entlang zweier Linearachsen parallel zur Oberfläche des Drehtellers 3 und einer Drehachse zur Ausrichtung im Arbeitsbereich der Bearbeitungsstation 6 beweglich ist.

Mithilfe der Achshandling-Einheit 11 ist der Trägerrahmen 100 in der Schweißstation 6d insbesondere auch zur Aufnahme einer oder mehrerer Klingen in dem Trägerrahmen 100 in vorbestimmten Positionen ausrichtbar. In der Regel wird der Trägerrahmen 100 dabei nacheinander zur Aufnahme von drei oder vier Klingen in radialer Richtung des Drehtellers 3 in vorbestimmte Positionen mit dem entsprechenden Klingenabstand bewegt.

Darüber hinaus ist die Halterungseinrichtung 10 mithilfe der jeweiligen Achshandling-Einheit 11 in den Übergabebereich einer Handhabungsvorrichtung 12 verfahrbar. In dem dargestellten Ausführungsbeispiel ist die Handhabungsvorrichtung als ein Pick&Place-Handling ausgebildet.

Mithilfe der Handhabungsvorrichtung 12 ist ein mit Klingen bestückter und zu einer Schneideinheit verarbeiteter Trägerrahmen 100 an eine Schnittstellenvorrichtung 14, vorliegend ausgebildet als das Förderband einer Warenteil-Logistik, übergebbar, die als Schnittstelle zu eventuellen weiteren Verarbeitungsschritten dient. Weiterhin sind die unbestückten Trägerrahmen 100 mithilfe derselben Handhabungsvorrichtung 12 von der Schnittstellenvorrichtung 14 in eine Halterungseinrichtung 10 übergebbar.

Im Übergabebereich der Handhabungsvorrichtung 12 sind die zur Schneideinheit verarbeiteten Trägerrahmen 100 mit Klingen mithilfe einer Kontrolleinrichtung 13 überprüfbar, beispielsweise im Hinblick auf eine korrekte Bestückung des Trägerrahmens 100 und/oder die Qualität der Schweißstellen.

Der Ablauf eines erfindungsgemäßen Verfahrens zum Schweißen von Klingen anhand der Ausführungsform einer erfindungsgemäßen Vorrichtung zum Schweißen von Klingen 1 aus Figur 1 läuft wie folgt ab.

Zunächst wird ein Trägerrahmen 100 mithilfe der Handhabungsvorrichtung 12 von der Schnittstellenvorrichtung 14 in eine Halterungseinrichtung 10 übergeben. Der in der Halterungseinrichtung 10 gehhalterte Trägerrahmen 100 wird mithilfe der der Halterungseinrichtung 10 zugeordneten Achshandling-Einheit 11 in den Arbeitsbereich der Schweißstation 6a transportiert und zur Aufnahme einer ersten Klinge vom in die entsprechende Bearbeitungsstation 6 getakteten Setzflügel 5 ausgerichtet.

Die in dem Setzflügel 5 gehalterte Klinge wurde zuvor in mehreren Arbeitstakten des Rundschalttisches 2 zunächst in der Klingenzuführstation 6b mit einer Klinge bestückt. Die Klinge wurde anschließend in der Klingenschneidestation 6c auf das erforderliche Breitenmaß zugeschnitten und der die Klinge halternde Setzflügel 5 in den Arbeitsbereich der Schweißstation 6a weitergetaktet.

Daraufhin wird die im Trägerrahmen 100 positionierte Klinge mithilfe der Schweißvorrichtung 9 am Trägerrahmen 100 verschweißt. Anschließend wird der Trägerrahmen 100 mithilfe der Achshandling-Einheit 11 in die Position zur Aufnahme einer weiteren Klinge verfahren, die wie vorstehend beschrieben von einem Setzflügel 5 aufgenommen wurde und bearbeitet wurde, bis der Trägerrahmen 100 vollständig bestückt und zur gewünschten Schneideinheit verarbeitet ist.

Die Schneideinheit wird dann mithilfe der Achshandling-Einheit 11 aus dem Arbeitsbereich der Bearbeitungsstation 6 des Rundschalttisches 3 in den Übergabebereich der Handhabungseinrichtung 12 verfahren und mithilfe der Handhabungseinheit 12 an die Schnittstellenvorrichtung 14 übergeben.

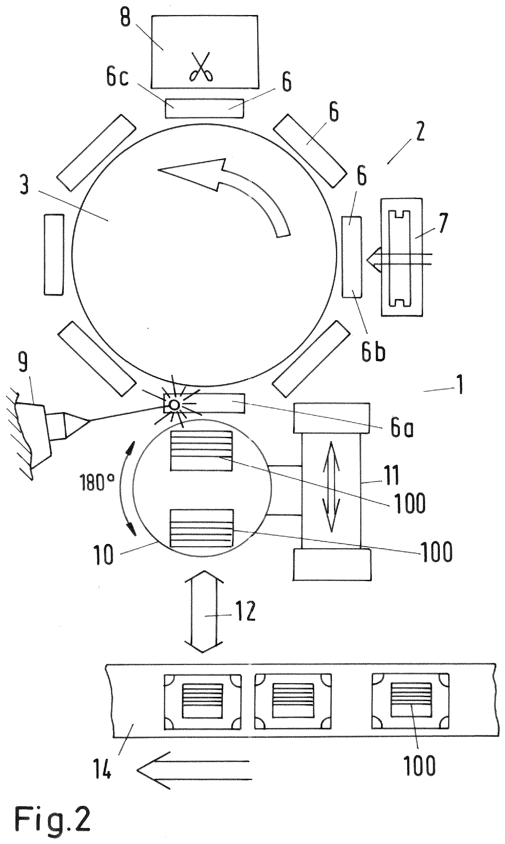

Die in Figur 2 schematisch dargestellte Ausführungsform einer Vorrichtung zum Schweißen von Klingen 1 unterscheidet sich von Figur 1 zunächst durch die Anzahl der Bearbeitungsstationen 6, wobei der Rundschalttisch 2 vorliegend acht Bearbeitungsstationen 6 aufweist. Auf dem Drehteller 3 sind entsprechend acht nicht dargestellte Setzflügel 5 angeordnet. Die Setzflügel sind aus Gründen der Übersicht nicht dargestellt, aber analog wie in der Ausgestaltung nach Fig. 1 vorgesehen.

Weiterhin unterscheidet sich die Ausführungsvariante der Figur 2 von Figur 1 noch dahingehend, dass diese eine als eine Doppel-Halterungseinrichtung ausgebildete Halterungseinrichtung 10 zur Halterung von zwei Trägerrahmen 100 nebeneinander aufweist, wobei diese eine einzige Achshandling-Einheit 11 aufweist.

Diese Ausführungsform ermöglicht zwar eine einfachere und kostengünstigere Konstruktion, es muss dabei jedoch in Kauf genommen werden, dass es jeweils zu Stillstandzeiten beim Schweißen der Klingen während der Übergabe der Schneideinheiten und der Trägerrahmen 100 durch die Handhabungsvorrichtung 12 kommt.

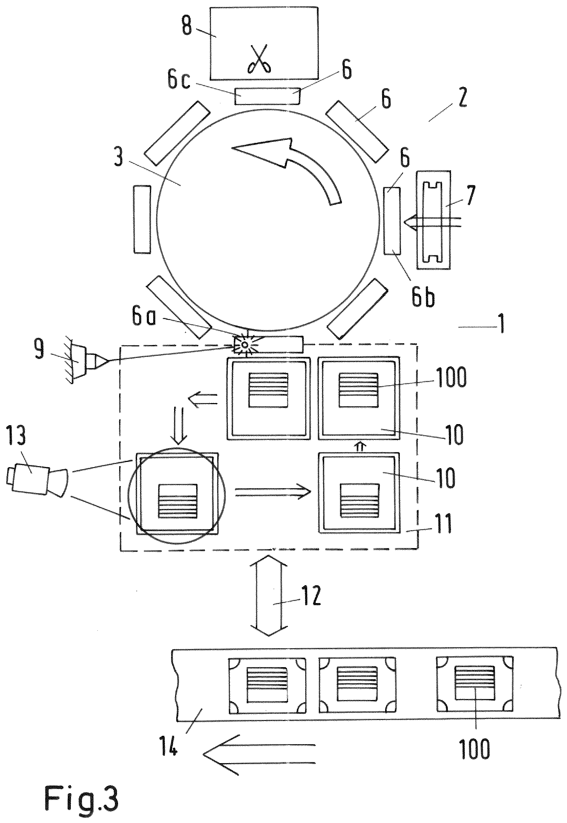

Die in Figur 3 dargestellte weitere Ausführungsform einer erfindungsgemäßen Vorrichtung zum Schweißen von Klingen 1 weist eine weitere Abwandlung im Bereich der Halterungseinrichtung 10 und der Achshandling-Einheit 11 auf. Die Setzflügel sind aus Gründen der Übersicht nicht dargestellt, aber analog wie in der Ausgestaltung nach Fig. 1 vorgesehen.

Hier ist ein Shuttle-System realisiert, bei dem mehrere Halterungseinrichtungen 10 mithilfe mindestens einer Achshandling-Einheit 11 entlang zweier Linearachsen in einer Ebene beweglich sind, sodass diese zwischen der Übergabeposition der Handhabungseinrichtung 12 und dem Arbeitsbereich der Schweißstation 6a am Rundschalttisch 2 beweglich sind.

Die in der Halterungseinrichtung 10 gehalterten Trägerrahmen 100 oder Schneideinheiten können in allen erfindungsgemäßen Ausführungsformen zusätzlichen Bearbeitungsschritten unterzogen werden.

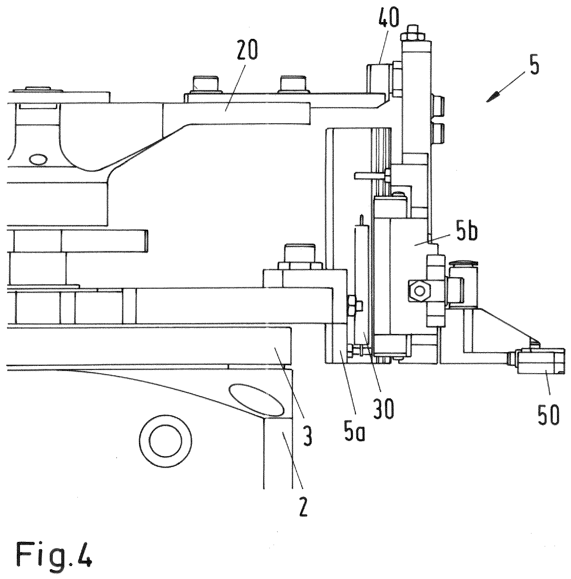

Fig. 4 zeigt in schematischer Seitenansicht eine als Setzflügel ausgebildete Aufnahme 5, die zur Aufnahme, zum Transport und zur Positionierung der Klingen auf dem Rundschalttisch dienen. Der Setzflügel 5 ist aus einem inneren Setzflügelteil 5a und einem äußeren Setzflügelteil 5b zusammengesetzt. Der äußere Setzflügelteil 5b ist gegenüber dem inneren Setzflügelteil 5a mittels einer Hubeinheit 20 senkrecht zur Oberfläche des Rundschalttisches 2 bzw. des Drehtellers 3 beweglich. Der der innere Setzflügelteil 5a ist dabei mit dem Drehteller 3 verschraubt, gegenüber diesem also unbeweglich befestigt.

Der äußere Setzflügelteil 5b wird mit Hilfe eines als Zugfeder ausgebildeten Federelementes 30 vertikal nach unten in Richtung Drehteller 3 bzw. zum inneren Setzflügelteil 5a hingezogen. An einem oberen Ende des äußeren Setzflügelteils 5b ist eine Mitnehmerrolle 40 angeordnet, die auf der Hubeinheit 20 aufliegt. Bei einer Hubbewegung der Hubeinheit 20 wird so der äußere Setzflügelteil 5b gegen die Kraft des Federelementes 30 vom Drehteller 3 nach oben mitgenommen. Dabei wird eine an einem unteren Ende des äußeren Setzflügelteils in diesem Fall mittels Vakuum befestigte Klinge 40 ebenfalls angehoben. Alternativ können andere Haltemöglichkeiten für die Klinge, wie beispielsweise Adhäsion, mechanisches Greifen und ähnliches, verwendet werden.

Die Erfindung ist nicht auf eine der vorbeschriebenen Ausführungsformen beschränkt, sondern in vielfältiger Weise abwandelbar. So kann beispielsweise die Anzahl der Bearbeitungsstationen und oder der Setzflügel bzw. Aufnahmen variiert werden.

### Bezugszeichenliste

1. Vorrichtung zum Schweißen von Klingen
2. Rundschalttisch
3. Drehteller
4. Drehachse
5. Aufnahme
6. Bearbeitungsstation
   6a. Schweißstation
   6b. Klingenzuführstation
   6c. Klingenschneidestation
   6d. leere Bearbeitungsstation
7. Klingenbereitstellungseinrichtung
8. Klingenschneideinrichtung
9. Schweißvorrichtung
10. Halterungseinrichtung
11. Achshandling-Einheit
12. Handhabungsvorrichtung
13. Kontrolleinrichtung
14. Schnittstellenvorrichtung
20. Hubeinheit
30. Federelement
40. Mitnehmerrolle
50. Klinge
100. Trägerrahmen

## Patentansprüche

1. Vorrichtung zum Schweißen von Klingen (1) aufweisend eine Klingenbereitstellungseinrichtung (7) zur Bereitstellung von Klingen, mindestens eine Halterungseinrichtung (10) zur Halterung mindestens eines Trägerrahmens (100), eine Schweißvorrichtung (9) zum Verschweißen einer oder mehrerer Klingen mit dem Trägerrahmen (100) zu einer Schneideinheit und einen Rundschalttisch (2) mit mehreren Bearbeitungsstationen (6) um einen Drehteller (3) herum, wobei die Klingenbereitstellungseinrichtung (7) Bestandteil einer Klingenzuführstation (6b) und die Schweißvorrichtung (9) Bestandteil einer Schweißstation (6a) des Rundschalttisches (2) sind und wobei die Vorrichtung (1) geeignete Mittel zum Zuführen des Trägerrahmens (100) in den Arbeitsbereich der Schweißstation (6a), der Ausrichtung des Trägerrahmens (100) in der Schweißstation (6a) und dem Abtransport einer aus dem Trägerrahmen (100) und einer oder mehrerer Klingen hergestellten Schneideinheit aufweist, **dadurch gekennzeichnet, dass** die Halterungseinrichtung (10) in den Arbeitsbereich der Schweißstation (6a) verfahrbar ist und nicht oder nur in einem begrenzten Winkelbereich mit dem Drehteller (3) des Rundschalttisches (2) umlaufend bewegbar ist.

2. Vorrichtung zum Schweißen von Klingen (1) nach Anspruch 1, **dadurch gekennzeichnet, dass** der Rundschalttisch (2) als ein Torque-Rundschalttisch ausgebildet ist.

3. Vorrichtung zum Schweißen von Klingen (1) nach einem der Ansprüche 1 und 2, **dadurch gekennzeichnet, dass** der Drehteller (3) mit als Setzflügel ausgebildeten Aufnahmen (5) ausgeführt ist, wobei die Setzflügel so auf dem Drehteller (3) angeordnet sind, dass die Schneidkante einer in einem Setzflügel gehalterten Klinge tangential zum Drehteller (3) ausgerichtet ist.

4. Vorrichtung zum Schweißen von Klingen (1) nach Anspruch 3, **dadurch gekennzeichnet, dass** die Setzflügel mithilfe einer Hubeinheit senkrecht zur Oberfläche des Drehtellers (3) beweglich sind.

5. Vorrichtung zum Schweißen von Klingen (1) nach Anspruch 4, **dadurch gekennzeichnet, dass** die Bewegung der Setzflügel mithilfe der Hubeinheit mit der Drehbewegung des Drehtellers (3) synchronisierbar ist.

6. Vorrichtung zum Schweißen von Klingen (1) nach einem der Ansprüche 1 bis 5, **dadurch gekennzeichnet, dass** der Halterungseinrichtung (10) mindestens eine Achshandling-Einheit (11) zur Bewegung und Ausrichtung der Halterungseinrichtung (10) zugeordnet ist.

7. Vorrichtung zum Schweißen von Klingen (1) nach Anspruch 6, **dadurch gekennzeichnet, dass** jeweils einer Halterungseinrichtung (10) zwei Achshandling-Einheiten (11) zugeordnet sind.

8. Vorrichtung zum Schweißen von Klingen (1) nach Anspruch 6, **dadurch gekennzeichnet, dass** die Halterungseinrichtung (10) als eine Doppel-Halterungseinrichtung zur gleichzeitigen Aufnahme von zwei Trägerrahmen (100) nebeneinander ausgebildet ist, wobei der Doppel-Halterungseinrichtung eine Achshandling-Einheit (11) zugeordnet ist.

9. Vorrichtung zum Schweißen von Klingen (1) nach einem der Ansprüche 1 bis 6, **dadurch gekennzeichnet, dass** diese ein Shuttle-System zur Zuführung von Trägerrahmen (100) in den Arbeitsbereich der Schweißstation (6a) und zum Abtransport der Schneideinheiten aus dem Arbeitsbereich der Schweißstation (6a) aufweist.

10. Verfahren zum Schweißen von Klingen umfassend die folgenden Verfahrensschritte:
a) Bereitstellen eines Trägerrahmens (100)
b) Übergabe des Trägerrahmens (100) in eine Halterungseinrichtung (10) mithilfe einer Handhabungsvorrichtung (12)
c) Verfahren der Halterungseinrichtung (10) mit dem Trägerrahmen (100) in den Arbeitsbereich einer Schweißstation (6a) eines Rundschalttisches (2)
d) Bereitstellen einer Klinge mit einer Klingenbereitstellungseinrichtung (7) an einer Klingenzuführstation (6b) des Rundschalttisches (2)
e) Aufnahme der Klinge mit einem Setzflügel auf dem Drehteller (3) des Rundschalttisches (2) an der Klingenzuführstation (6b)
f) Takten des Rundschalttisches (2), bis die im Setzflügel gehalterte Klinge an der Schweißstation (6a) angelangt ist, in deren Arbeitsbereich der Trägerrahmen (100) in der Halterungseinrichtung (10) gehaltert ist
g) Ausrichtung des Trägerrahmens (100) in der Halterungseinrichtung (10) zur Klinge mithilfe einer Achshandling-Einheit (11)
h) Platzieren der Klinge in der vorgesehenen Position auf dem Trägerrahmen (100) mithilfe des Setzflügels
i) Verschweißen der Klinge mit dem Trägerrahmen (100) mithilfe einer Schweißeinrichtung (9)

11. Verfahren zum Schweißen von Klingen nach Anspruch 10, **dadurch gekennzeichnet, dass** die Schritte d) bis i) so oft wiederholt werden, bis die Schneideinheit die vorgesehene Anzahl an Klingen aufweist.

12. Verfahren zum Schweißen von Klingen nach einem der Ansprüche 10 und 11, **dadurch gekennzeichnet, dass** die Halterungseinrichtung (10) mithilfe einer ersten Achshandling-Einheit (11) und einer zweiten Achshandling-Einheit (11) bewegt wird, wobei die erste Achshandling-Einheit (11) in Zusammenarbeit mit dem Rundschalttisch (2) die Nachpositionierung des Trägerrahmens (100) beim Schweißen der Klingen vornimmt und die zweite Achshandling-Einheit (11) in Zusammenarbeit mit der Handhabungseinrichtung (12) für die Trägerrahmen (100) die Positionierung der Halterungseinrichtung (10) zur Übergabe der fertiggeschweißten Schneideinheiten an die Schnittstellenvorrichtung (14) und zum Bestücken der Halterungseinrichtung (10) mit einem neuen Trägerrahmen (100) vornimmt, wobei die Halterungseinrichtung (10) starr positioniert bleibt.

13. Verfahren zum Schweißen von Klingen nach einem der Ansprüche 10 bis 12, **dadurch gekennzeichnet, dass** die Setzflügel mit jeweils einer Hubeinheit bewegt werden, sodass der Abstand einer im Setzflügel gehalterten Klinge bzw. der Aufnahmeeinrichtung des Setzflügels vom Drehteller (3) in Abhängigkeit der Erfordernisse der jeweiligen Bearbeitungsstation (6) angepasst ist.

14. Verfahren zum Schweißen von Klingen nach einem der Ansprüche 10 bis 13, **dadurch gekennzeichnet, dass** die Bewegung der Hubeinheiten und/oder der Arbeitsablauf an mindestens einer Bearbeitungsstation (6) mit der Bewegung bzw. der Winkelposition des Drehtellers (3) des Rundschalttisches (2) synchronisiert wird.

15. Verfahren zum Schweißen von Klingen nach einem der Ansprüche 10 bis 14, **dadurch gekennzeichnet, dass** eine Vorrichtung zum Schweißen von Klingen (1) nach einem der Ansprüche 1 bis 9 verwendet wird.

## Claims

1. An apparatus for the welding of blades (1) comprising a blade-supply device (7) for supplying blades, at least one holder device (10) for holding at least a carrier frame (100), a welding apparatus (9) for the welding of one or more of blades to a carrier frame (100) to form a cutting unit and a rotary indexing table (2) with a plurality of processing stations (6) around a turntable (3), wherein the blade-supply device (7) is a constituent part of a blade-feeding station (6b), and the welding apparatus (9) is a constituent part of a welding station (6a), of the rotary indexing table (2) and wherein the apparatus (1) has suitable means for feeding the carrier frame (100) into the operating region of the welding station (6a), for orienting the carrier frame (100) in the welding station (6a) and for removing a cutting unit produced from the carrier frame (100) and one or more blades, **characterized in that** the holder device (10) is movable in the operating region of the welding station (6a) and is not movable in circulation or only over a limited angular range with the turntable (3) of the rotary indexing table (2).

2. The apparatus for the welding of blades (1) as claimed in claim 1, **characterized in that** the rotary indexing table (2) is designed in the form of a torque rotary table.

3. The apparatus for the welding of blades (1) as claimed in either of claims 1 and 2, **characterized in that** the turntable (3) is configured with mounts (5) designed in the form of positioning wings, wherein the positioning wings are arranged on the turntable (3) such that the cutting edge of a blade held in a positioning wing is oriented tangentially in relation to the turntable (3).

4. The apparatus for the welding of blades (1) as claimed in claim 3, **characterized in that** the positioning wings are movable perpendicularly in relation to the surface of the turntable (3) with the aid of a lifting unit.

5. The apparatus for the welding of blades (1) as claimed in claim 4, **characterized in that** the movement of the positioning wings is synchronizeable with the rotary movement of the turntable (3) with the aid of the lifting unit.

6. The apparatus for the welding of blades (1) as claimed in one of claims 1 to 5, **characterized in that** the holder device (10) is assigned at least one axial handling unit (11) for moving and orienting the holder device (10).

7. The apparatus for the welding of blades (1) as claimed in claim 6, **characterized in that** a respective holder device (10) is assigned two axial handling units (11).

8. The apparatus for the welding of blades (1) as claimed in claim 6, **characterized in that** the holder device (10) is designed in the form of a double holder device for simultaneously receiving two carrier frames (100) one beside the other, wherein the double holder device is assigned a single axial handling unit (11).

9. The apparatus for the welding of blades (1) as claimed in one of claims 1 to 6, **characterized in that** it has a shuttle system for feeding carrier frames (100) into the operating region of the welding station (6a) and for removing the cutting units from the operating region of the welding station (6a).

10. A method for the welding of blades and comprising the following method steps:
a) a carrier frame (100) is supplied
b) the carrier frame (100) is transferred into a holder device (10) with the aid of a handling apparatus (12)
c) the holder device (10) is displaced with the carrier frame (100) into the operating region of a processing station (6a) of a rotary indexing table (2)
d) a blade is supplied by a blade-supply device (7) at a blade-feeding station (6b) of the rotary indexing table (2)
e) the blade is received by a positioning wing on the turntable (3) of the rotary indexing table (2) at the blade-feeding station (6b)
f) the rotary indexing table (2) is moved at regular intervals until the blade held in the positioning wing has reached the processing station (6a) in the operating region of which the carrier frame (100) is held in the holder device (10)
g) the carrier frame (100) in the holder device (10) is oriented in relation to the blade with the aid of an axial handling unit (11)
h) the blade is placed in the envisaged position on the carrier frame (100) with the aid of the positioning wing
i) the blade is welded to the carrier frame (100) with the aid of a welding device (9).

11. The method for the welding of blades as claimed in claim 10, **characterized in that** steps d) to i) are repeated until such time as the cutting unit has the envisaged number of blades.

12. The method for the welding of blades as claimed in either of claims 10 and 11, **characterized in that** the holder device (10) is moved with the aid of a first axial handling unit (11) and a second axial handling unit (11), wherein the first axial handling unit (11), in cooperation with the rotary indexing table (2), repositions the carrier frame (100) when the blades are being welded and the second axial handling unit (11), in cooperation with the handling device (12) for the carrier frames (100), positions the holder device (10) for the purposes of transferring the finish-welded cutting units to the interface apparatus (14) and of equipping the holder device (10) with a new carrier frame (100), wherein the holder device (10) remains rigidly positioned.

13. The method for the welding of blades as claimed in one of claims 10 to 12, **characterized in that** the positioning wings are moved by a respective lifting unit so that the distance of a blade held in the positioning wing, or of the receiving device of the positioning wing, from the turntable (3) is adapted in dependence on the requirements of the respective processing station (6).

14. The method for the welding of blades as claimed in one of claims 10 to 13, **characterized in that** the movement of the lifting units and/or the procedure at at least one processing station (6) is synchronized with the movement and/or the angular position of the turntable (3) of the rotary indexing table (2).

15. The method for the welding of blades as claimed in one of claims 10 to 14, **characterized in that** use is made of an apparatus for the welding of blades (1) as claimed in one of claims 1 to 9.

## Revendications

1. Dispositif de soudage de lames (1) présentant un appareil de fourniture de lames (7) pour fournir des lames, au moins un appareil de maintien (10) pour maintenir au moins un cadre de support (100), un dispositif de soudage (9) pour souder une ou plusieurs lames au cadre de support (100) en une unité de coupe, et une table à transfert circulaire (2) avec plusieurs stations d'usinage (6) autour d'un plateau tournant (3), le dispositif de fourniture de lames (7) faisant partie d'une station d'acheminement de lames (6b) et le dispositif de soudage (9) faisant partie d'une station de soudage (6a) de la table à transfert circulaire (2), et le dispositif (1) présentant des moyens appropriés pour acheminer le cadre de support (100) dans la zone de travail de la station de soudage (6a), orienter le cadre de support (100) dans la station de soudage (6a) et évacuer une unité de coupe fabriquée à partir du cadre de support (100) et d'une ou plusieurs lames, **caractérisé en ce que** l'appareil de maintien (10) peut être déplacé dans la zone de travail de la station de soudage (6a) et ne peut pas être déplacé en rotation avec le plateau tournant (3) de la table à transfert circulaire (2), ou seulement dans une plage angulaire limitée.

2. Dispositif de soudage de lames (1) selon la revendication 1, **caractérisé en ce que** la table à transfert circulaire (2) est réalisée sous la forme d'une table à transfert circulaire à couple.

3. Dispositif de soudage de lames (1) selon l'une quelconque des revendications 1 et 2, **caractérisé en ce que** le plateau tournant (3) est conçu avec des logements (5) conçus sous forme d'ailettes de pose, les ailettes de pose étant agencées sur le plateau tournant (3) de telle sorte que le tranchant d'une lame maintenue dans une ailette de pose soit orienté tangentiellement par rapport au plateau tournant (3).

4. Dispositif de soudage de lames (1) selon la revendication 3, **caractérisé en ce que** les ailettes de pose sont mobiles perpendiculairement à la surface du plateau tournant (3) à l'aide d'une unité de levage.

5. Dispositif de soudage de lames (1) selon la revendication 4, **caractérisé en ce que** le mouvement des ailettes de pose peut être synchronisé avec le mouvement de rotation du plateau tournant (3) à l'aide de l'unité de levage.

6. Dispositif de soudage de lames (1) selon l'une quelconque des revendications 1 à 5, **caractérisé en ce qu'**au moins une unité de manipulation d'axe (11) est associée à l'appareil de maintien (10) pour déplacer et orienter l'appareil de maintien (10).

7. Dispositif de soudage de lames (1) selon la revendication 6, **caractérisé en ce que** deux unités de manipulation d'axe (11) sont associées respectivement à un appareil de maintien (10).

8. Dispositif de soudage de lames (1) selon la revendication 6, **caractérisé en ce que** l'appareil de maintien (10) est réalisé sous forme d'appareil de maintien double pour recevoir simultanément deux cadres de support (100) l'un à côté de l'autre, une unité de manipulation d'axe (11) étant associée à l'appareil de maintien double.

9. Dispositif de soudage de lames (1) selon l'une quelconque des revendications 1 à 6, **caractérisé en ce qu'**il présente un système de navette pour acheminer des cadres de support (100) dans la zone de travail de la station de soudage (6a) et pour évacuer les unités de coupe de la zone de travail de la station de soudage (6a).

10. Procédé de soudage de lames comprenant les étapes de procédé suivantes :
a) la fourniture d'un cadre de support (100)
b) le transfert du cadre de support (100) dans un appareil de maintien (10) à l'aide d'un dispositif de manipulation (12)
c) le déplacement de l'appareil de maintien (10) avec le cadre de support (100) dans la zone de travail d'une station de soudage (6a) d'une table à transfert circulaire (2)
d) la fourniture d'une lame avec un appareil de fourniture de lames (7) au niveau d'un poste d'acheminement de lames (6b) de la table à transfert circulaire (2)
e) la réception de la lame avec une ailette de pose sur le plateau tournant (3) de la table à transfert circulaire (2) au niveau de la station d'acheminement de lames (6b)
f) la rotation de la table à transfert circulaire (2) jusqu'à ce que la lame maintenue dans l'ailette de pose arrive à la station de soudage (6a), dans la zone de travail de laquelle le cadre de support (100) est maintenu dans l'appareil de maintien (10)
g) l'orientation du cadre de support (100) dans l'appareil de maintien (10) par rapport à la lame à l'aide d'une unité de manipulation d'axe (11)
h) la mise en place de la lame dans la position prévue sur le cadre porteur (100) à l'aide de l'ailette de pose
i) le soudage de la lame au cadre de support (100) à l'aide d'un appareil de soudage (9)

11. Procédé de soudage de lames selon la revendication 10, **caractérisé en ce que** les étapes d) à i) sont répétées jusqu'à ce que l'unité de coupe présente le nombre prévu de lames.

12. Procédé de soudage de lames selon l'une quelconque des revendications 10 et 11, **caractérisé en ce que** l'appareil de maintien (10) est déplacé à l'aide d'une première unité de manipulation d'axe (11) et d'une deuxième unité de manipulation d'axe (11), la première unité de manipulation d'axe (11) effectuant, en coopération avec la table à transfert circulaire (2) le repositionnement du cadre de support (100) lors du soudage des lames et la deuxième unité de manipulation d'axe (11) effectuant, en coopération avec l'appareil de manipulation (12) pour les cadres de support (100), le positionnement de l'appareil de maintien (10) pour le transfert des unités de coupe soudées finies vers le dispositif d'interface (14) et pour l'équipement de l'appareil de maintien (10) avec un nouveau cadre de support (100), l'appareil de maintien (10) restant positionné de manière rigide.

13. Procédé de soudage de lames selon l'une quelconque des revendications 10 à 12, **caractérisé en ce que** les ailettes de pose sont déplacées chacune avec une unité de levage, de telle sorte que la distance entre une lame maintenue dans l'ailette de pose ou l'appareil de réception de l'ailette de pose et le plateau tournant (3) est adaptée en fonction des exigences de la station d'usinage (6) respective.

14. Procédé de soudage de lames selon l'une quelconque des revendications 10 à 13, **caractérisé en ce que** le déplacement des unités de levage et/ou le déroulement du travail sur au moins une station de travail (6) est synchronisé avec le déplacement ou la position angulaire du plateau tournant (3) de la table à transfert circulaire (2).

15. Procédé de soudage de lames selon l'une quelconque des revendications 10 à 14, **caractérisé en ce qu'**un dispositif de soudage de lames (1) selon l'une quelconque des revendications 1 à 9 est utilisé.
